# EUROPÄISCHE PATENTSCHRIFT

(11) **EP 0 896 120 B1**
(45) Veröffentlichungstag und Bekanntmachung des Hinweises auf die Patenterteilung: **28.07.2004**
(21) Anmeldenummer: 98114279.7
(22) Anmeldetag: 30.07.1998
(51) Int. Cl.: E05D 15/52, B23P 21/00, E05D 7/12

(54) **Verfahren und Scharnierbeschlag für eine montageautomatenunterstützte Montage an einem Flügel eines Fenster, einer Tür oder dergleichen**
ET - Method and fitting for robot assisted mounting on a wing of a window, door or the like.
FT - Procédé et ferrure pour montage assisté par automate sur une aile d'une fenêtre, porte ou similaire.

(30) Priorität: 07.08.1997 DE 19734280
(43) Veröffentlichungstag der Anmeldung: 10.02.1999
(73) Patentinhaber: Aug. Winkhaus GmbH & Co. KG, D-48291 Telgte (DE)
(72) Erfinder: Renz, Dieter, 49479 Ibbenbüren (DE); Schenck, Hans-Peter, 48291 Telgte (DE); Flege, Guido, 48485 Neuenkirchen (DE)
(74) Vertreter: Hoffmeister, Helmut, Dr. Dipl.-Phys.

(56) Entgegenhaltungen:
- EP-A- 0 674 075
- DE-A- 4 417 818

## Beschreibung

Die Erfindung betrifft ein Verfahren für eine montageautomatenunterstützte Montage von Scharnierbeschlägen an einem Flügel eines Fensters oder einer Tür sowie einen Scharnierbeschlag dafür.

Ein Verfahren und ein Scharnierbeschlag für eine Montage an einem Flügel eines Fensters, einer Tür oder dergleichen sind aus der DE 195 26 01 6 A1 bekannt. Hierbei wird ein Flügellagerwinkel mit einem Drehbeschlag zu einem kompletten Scharnierbeschlag mit Hilfe von Gewindestiften verbunden. Im Flügellagerwinkel sind Befestigungsausnehmungen eingebracht. Mit Hilfe von Schrauben wird dann beim Fensterhersteller der komplette Scharnierbeschlag an einem der Holme befestigt.

Aus der DE 43 23 939 C2 ist es bekannt, einen Scharnierarm mit einem Scharnierteil mit Hilfe von Befestigungsschrauben zu einem kompletten Scharnierbeschlag zusammenzuschrauben. Anschließend wird der so zusammengesetzte Scharnierbeschlag an einem Fensterflügel befestigt und zum Teil einer Gelenkvorrichtung.

Aus der EP 674 075 A1 ist ein Drehbeschlag für einen Flügel eines Fensters oder einer Tür bekannt, der auch bei Fenster- und/oder Türkonstruktionen mit verdeckt angeordneten Drehlagern bzw. im Falle räumlich beengter Verhältnisse im Bereich der Drehlager eine einfache Montage der betreffenden Fenster- oder Türflügel zulässt. Hierzu ist ein Verbindungsarm lösbar mit einem flügelfesten Beschlagteil verbunden ist, wobei die eine der lösbaren Verbindungen als Rastverbindung ausgebildet ist. Zur Montagevorbereitung kann das Drehlager gemeinsam mit dem daran vormontierten Verbindungsarm vorab an dem Rahmen festgelegt werden. Die Montageverbindung zwischen Rahmen und Flügel wird dabei nicht an dem Drehlager sondern vielmehr mit Abstand von diesem zwischen dem flügelseitigen Ende des Verbindungsarms und dem Flügel hergestellt, wodurch sich Fenster- und Türflügel auch in denjenigen Fällen problemlos einbauen lassen, in denen das Drehlager verdeckt ist oder der zur Handhabung von Verbindungselementen erforderliche Raum nicht zur Verfügung steht.

Die DE 42 32 945 C2 gibt einen Scharnierbeschlag für Fenster, Türen oder dergleichen an. Der Scharnierbeschlag ist eine Ausstellvorrichtung für Drehkippflügel, bestehend aus einem Scharnierarm, der am Flügel angreift und mit einem ersten Schenkel eines Zwischenstücks verbunden ist, dessen rechtwinklig zum ersten Schenkel verlaufender zweiter Schenkel mit einem Lappen eines Hülsensteils für einen wahlweisen Rechts- und Linksumschlag um 180° verschwenkbar in Verbindung steht. Der Lappen des Hülsenteils ist in jeder seiner beiden möglichen 180°-Endschwenklagen relativ zum zweiten Schenkel des Zwischenstücks durch Schnapp-Rastvorrichtungen fixierbar, bei denen jeweils ein Rastvorsprung in eine Vertiefung eingreift. Der durch die Rastverbindung zusammengesetzte Scharnierbeschlag wird dann anschließend an dem Flügel des Fensters oder der Tür festgeschraubt.

Aus der DE 41 02 295 C1 ist eine flügelrahmenseitige Ecklagerbaugruppe für ein Ecklager eines Drehkippfensters bekannt. Eine Lagerhülse als Ecklagereinheit ist über einen Verbindungssteg in eine Befestigungsplatte auslaufend verstellbar mit einem Ecklagerwinkel verbunden. Damit eine nachträgliche Andruckregulierung durchgeführt werden kann, greifen ein oder mehrere exzentrisch verdrehbare, mit dem Ecklagerwinkel verbundene Zylinderstifte in jeweils ein sie umschließendes, sich in Richtung des zugehörigen Schenkels des Ecklagerwinkels erstreckendes Langloch der Befestigungsplatte ein.

Nachteilig ist bei den vorgenannten bekannten Scharnierbeschlägen, daß sie bereits vor dem Anbringen an den Flügel des Fensters oder der Tür komplett zusammengesetzt sind. Darüber hinaus ist jeder Flügellagerwinkel für einen Scharnierbeschlag unterschiedlich ausgebildet, sei es für einen Flügellagerwinkel, für ein Teil einer Schwenkvorrichtung, für eine Anstellvorrichtung für ein Drehkippfenster oder dergleichen. Er ist angepaßt hinsichtlich Schraubenabstand für die Flügelbefestigung und Schenkellänge des Flügellagerwinkels. Diese Gestaltungsvielfalt der Scharnierbeschläge schließt eine montageautomatenunterstützte Montage aus. Der Montageautomat kann nicht erkennen, an welcher Rahmenecke welcher Scharnierbeschlag zu montieren ist und wo und wieviel Befestigungsausnehmungen für das Einschrauben von Befestigungsschrauben zu berücksichtigen sind.

Aus der DE 44 17 818 A1 ist ein Verfahren und aus der DE 44 17 842 A1 sind Beschlagteile für eine montageautomatenunterstützte Montage, allerdings für ein Beschlagsystem bekannt. Das Beschlagsystem besteht aus Eckumlenkungen und Eckumlenkungs-Verbindungseinheiten als Beschlagteilen. Die Eckumlenkungen bestehen hierbei aus einem Eckwinkel mit Stulpschienen-Kopplungselementen an beiden Winkelenden und einem am Eckwinkel beweglich gelagerten Kraftübertragungsglied mit Treibstangenkopplungselementen an beiden Gliedenden. An jedem der beiden Eckwinkelschenkel ist ein bewegungsverkuppeltes Riegelglied zum Zusammenwirken mit festrahmenseitigen Beschlagteilen oder einer Ausstellschereinheit vorgesehen. Sämtliche Eckumlenkungen des Beschlagsystems sind baugleich ausgeführt.

Die Eckumlenkungs-Verbindungseinheiten sind aus Stulpschienenabschnitten und einem Treibstangenabschnitt zur Ankopplung der jeweiligen Stulpschienenenden bzw. Treibstangenenden an die Stulpschienenkopplungselemente bzw. Treibstangenkopplungselemente zweier zu verbindender Eckumlenkungen aufgebaut.

Bei der automatengestützten Montage werden zuerst die baugleichen Eckumlenkungen auf die Rahmenecken des Flügels des Fensters oder der Tür befestigt. Danach werden ebenfalls mittels Montageautomaten die Eckumlenkungs-Verbindungselemente montiert.

Es stellt sich die Aufgabe, ein Verfahren und einen Scharnierbeschlag der eingangs genannten Art für eine montageautomatenunterstützte Montage an einem Flügel eines Fensters, einer Tür oder dergleichen unter Berücksichtigung der aus dem montageautomatenunterstützten Montage von Beschlagsystemen gewonnenen Erkenntnisse weiterzuentwickeln.

Erfindungsgemäß wird diese Aufgabe durch ein Verfahren gelöst, bei dem
a) in einer ersten Montagephase mittels Montageautomaten am Flügel wenigstens ein Einheits-Flügellagerwinkel montiert und
b) in einer nachfolgenden zweiten Montagephase ein entsprechendes Scharnierteil des jeweiligen Scharnierbeschlages wenigstens durch eine Rastverbindung an dem Einheits-Flügellagerwinkel befestigt wird.

Die mit der Erfindung erzielten Vorteile bestehen insbesondere darin, daß die Zweiteiligkeit des Scharnierbeschlages beibehalten wird, seine Montage aber grundsätzlich geändert wird. So werden in der ersten Montagephase die Anzahl der Einheits-Flügellagerwinkel mittels Montageautomat angeschraubt. Wieviel Einheits-Flügellagerwinkel an dem jeweiligen Flügel befestigt werden, hängt von den zu realisierenden Funktionen Kippen oder Drehen des jeweiligen Fensters oder der Tür ab. Für ein universelles Beschlagen des Flügels können drei seiner Ecken mit jeweils einem Einheits-Flügellagerwinkel beschlagen werden. Mit diesen drei Einheits- Flügellagerwinkeln lassen sich Kipp- und/oder Drehbewegungen der Tür oder des Fensters realisieren. Ganz wesentlich ist, daß in einer nachfolgenden zweiten Montagephase erst durch ein Einrasten eines entsprechenden Scharnierteils der jeweilige Scharnierbeschlag ausgebildet wird. Der Rastvorgang zum Verbinden des Scharnierteils mit dem Einheits-Flügellagerwinkel ist weniger kraft- und montageaufwendig durchzuführen, als das Einschrauben des kompletten Scharnierbeschlages. Diese zweite Montagephase kann deshalb kostengünstig beim Fensterhersteller und sogar auf der Baustelle realisiert werden.

Vor der Herstellung der Rastverbindung können die Scharnierteile an die Einheits-Flügellagerwinkel an- und eingehängt werden. Das An- und Einhängen erleichtert den Rastvorgang. Darüber hinaus entsteht neben der Rastverbindung zusätzlich eine Einhängverbindung, so daß die Einheits-Flügellagerwinkel und die Scharnierteile sicher miteinander verbunden sind.

Von Vorteil für das Beschlagen der Ecken ist es, daß baugleiche Einheits-Flügellagerwinkel eingesetzt werden. Die baugleichen Einheits-Flügellagerwinkel erlauben es, einen weniger komplizierten Montageautomaten einzusetzen und erlauben ein Anpassen an Fertigungstakt der Flügelherstellung.

Die Scharnierteile können mit einem im wesentlichen baugleichen Adapterprofil in die Einheits-Flügellagerwinkel von Hand an- und eingehängt und mit ihnen verrastet werden. Die Verwendung baugleicher Adapterprofile erleichtert dem Fensterhersteller sehr wesentlich das endgültige Montieren des Scharnierbeschlages.

Die gestellte Aufgabe wird darüber hinaus durch einen Scharnierbeschlag mit den Merkmalen des Anspruchs 5 oder 6 gelöst.

Die hiermit erzielten Vorteile bestehen insbesondere darin, daß die Ausbildung des Einheits-Flügellagerwinkels und die des Scharnierteils die Voraussetzungen für eine montageautomatenunterstützte Montage wenigstens der Einheits-Flügellagerwinkel schafft. Die Art der Verbindung mittels einer Rastverbindung, die aus der Rasterklippeinheit und dem Verankerungsbolzenpilz besteht, reduziert ganz wesentlich das Zusammensetzen der Einheits-Flügellagerwinkel und der Scharnierteile. Ganz wesentlich wird darüber hinaus der Zeitpunkt der Zusammensetzung dieser beiden Teile verändert. Es wird der aus dem Stand der Technik über viele Jahrzehnte eingefahrene Weg verlassen und es werden die Scharnierteile bereits mit einem am Flügel anmontierten Einheits-Flügellagerwinkel befestigt.

Auf dem Flügelschenkel des Einheits- Flügellagerwinkels kann ein Verankerungspilz aufgesetzt sein. In das Adapterprofil kann eine Einhängausnehmung eingebracht sein. In diese Einhängausnehmung ist der Verankerungspilz einsetzbar.

Die Einhängausnehmung ist als Einhängschlüsselloch ausgebildet. Ihre Rundlochausnehmung hat einen solchen Durchmesser, daß die Pilzverdickung des Verankerungspilzes durch sie hindurchführbar ist. Die sich an die Rundlochausnehmung anschließende Langlochausnehmung hingegen ist so breit, daß der zylinderförmige Schaft des Verankerungspilzes in ihr hin- und herführbar und die Pilzverdickung auf dem Adapterprofil führbar ist. Hierdurch wird das An- und Einhängen der Ecklagereinheit erleichtert.

Die Rasteradaptereinheit und der Verankerungspilz kann an jedem der Flügelschenkel angeordnet sein. Hierdurch erhöht sich die Einsatzmöglichkeit des Einheits-Flügellagerwinkels,denn das Scharnierteil läßt sich sowohl an dem einem als auch am anderen Flügelschenkel montieren.

Die Rasteradaptereinheit besteht aus einer Schipplatte, die vor einer in einen der Flügelschenkel eingebrachte Halteausnehmung vorgesetzt ist. In die Schipplatte ist eine Verankerungsausnehmung eingebracht, die von wenigstens einem Federbandelement begrenzt ist. Hierdurch kann der Verankerungsbolzenpilz nach dem Einrasten gehalten werden. Die Schipplatte kann mit wenigstens einem Befestigungselement vor der Halteausnehmung so angebracht werden, daß die Federwandelemente wenigstens teilweise in diese hineinragen. An dieser Stelle sei erwähnt, daß die Schipplatte auch als integrierter Teil der Flügelschenkel ausgebildet werden kann. Die Ausbildung einer separaten Schipplatte hat den Vorteil, daß für die Schipplatte und die Einheits-Flügellagerwinkel unterschiedliche Materialien eingesetzt werden können. So kann für die Schipplatte hochwertiger Federstahl verwendet werden, hingegen für die Flügelschenkel gängiges Bandmaterial, das ein rechtwinkliges Abbiegen beider Schenkel und deren gleichlange Ausbildung erlaubt.

Die Halteausnehmung kann steigbügelförmig ausgebildet sein. Das hat den Vorteil, daß der Verankerungsbolzenpilz zum einen sicher im gerundeten Teil des Steigbügels gehalten und im sich darüber erstreckenden in etwa eckigen Teil hin und her bewegt werden kann. Das erleichtert ein Einjustieren des Flügels im Flügelrahmen des Fensters.

Auf jedem der Flügelschenkel kann wenigstens ein Befestigungsprisma angeordnet sein. Durch jedes Befestigungsprisma und den jeweiligen Flügelschenkel kann sich eine Befestigungsausnehmung durchziehen, mit der der Einheits-Flügellagerwinkel am und im Flügel des Fensters oder der Tür oder dergleichen gehalten wird.

Die Ecklagereinheit ist mit dem Adapterprofil durch ein Drehgelenk verbunden. Auch hierdurch wird das Einpassen des Flügels in den Rahmen der Tür oder des Fensters erleichtert.

Das Drehgelenk kann darüber hinaus in einer Schraubverbindung gehalten sein. Auch mit Hilfe dieser Schraubverbindung wird das Einjustieren des Flügels in den Fensterrahmen der Tür oder des Fensters erleichtert.

Die Ecklagereinheit kann als Kipplager, Ecklager oder dergleichen ausgebildet sein. Damit wird die Universalität des Scharnierbeschlages wirksam unterstützt.

Ein Ausführungsbeispiel der Erfindung ist in der Zeichnung dargestellt und wird im folgenden näher beschrieben. Es zeigen
- Fig. 1a: einen Einheits-Flügellagerwinkel in einer schematischen, perspektivischen Darstellung von innen gesehen,
- Fig. 1b: einen Einheits-Flügellagerwinkel gemäß Fig. 1a von außen gesehen,
- Fig. 1c: einen Ausschnitt aus einem Einheits-Flügellagerwinkel gemäß Fig. 1a in einer schematischen, vergrößerten Darstellung,
- Fig. 2 bis 4: verschiedene Ausführungsformen von Scharnierteilen in einer schematischen, perspektivischen Darstellung,
- Fig. 5: einen Einheits-Flügellagerwinkel gemäß Fig. 1a bis 1c,
- Fig. 6: mit Einheits-Flügellagerwinkeln gemäß Fig. 1a bis 1c und 5 zu montierende Flügelrahmen unterschiedlicher Größe,
- Fig. 7: eine Einheits-Flügellager-Anschlagsektion in einer schematisch dargestellten Draufsicht und
- Fig. 8 und 9: mit Scharnierbeschlägen gemäß den Fig. 1a bis 5 beschlagene Flügelrahmen gemäß Fig. 6 in einer schematischen Teil- und teilweise geschnittenen Darstellung.

Scharnierbeschläge 2.1, 2.2, 2.3 bestehen aus
- Einheits-Flügellagerwinkeln 1.1, ... 1.n und
- Scharnierteilen 25, 26, 27.

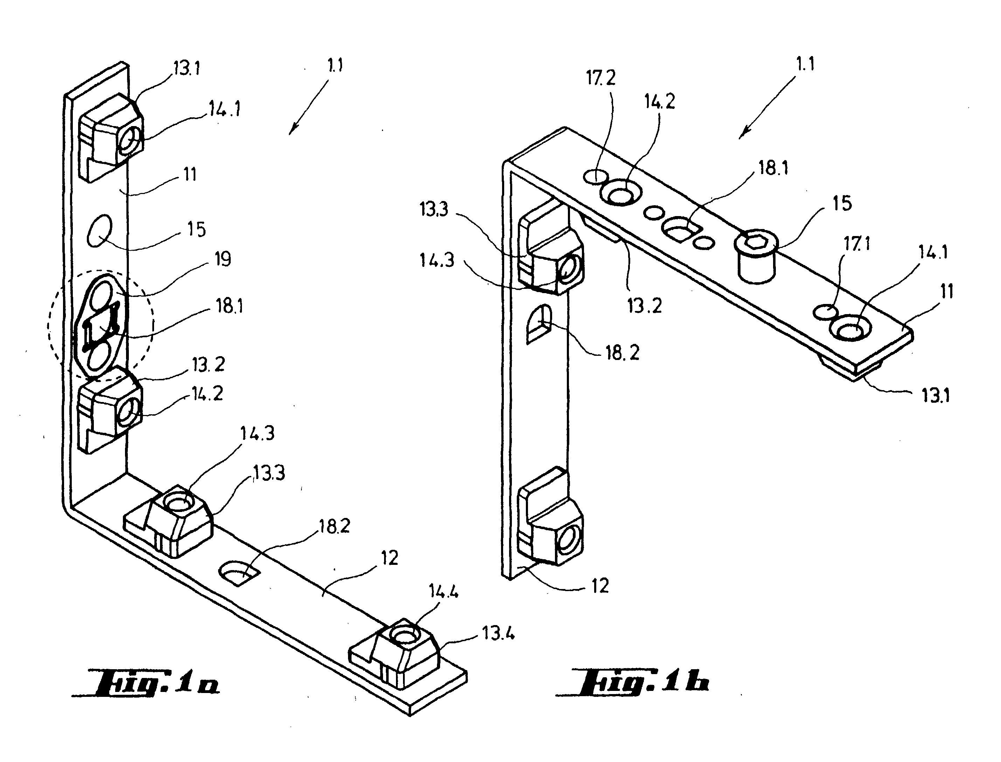

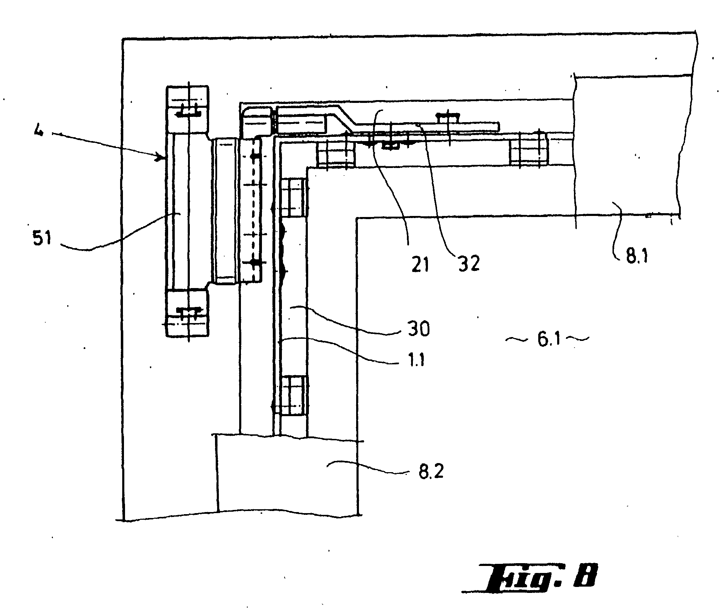

Die Einheitswinkel 1.1, ... sind in den Fig. 1a, 1b, 1c und 5 dargestellt. Sie bestehen aus zwei gleichlangen Flügelteilen 11 und 12. Die Flügelteile 11 und 12 sind aus einem Bandmaterial von 15 mm Breite und 3 mm Stärke gefertigt und einstückig im rechten Winkel zueinander abgebogen. Wie die Fig. 1a und 1b zeigen, ist auf dem Flügelschenkel 11 ein Verankerungspilz 15 angeordnet. Dieser Verankerungspilz 15 ist zylindrisch ausgebildet und weist am oberen Ende eine umlaufende Pilzverdickung auf. Er ist vorzugsweise im Nietverfahren mit dem Flügelschenkel 11 verbunden.

Unter dem Verankerungspilz 15 ist als erfindungswesentliches Teil eine Rasterklippeinheit 19 angeordnet. Diese besteht, wie insbesondere auch Fig. 1c zeigt, aus einer Halteausnehmung 18.1. Die Halteausnehmung 18.1 ist steigbügelförmig ausgebildet. Eine ebenso ausgebildete Halteausnehmung 18.2 ist im Flügelschenkel 12 eingebracht. Vor der steigbügelförmigen Halteausnehmung 18.1 ist eine Schipplatte 20 angeordnet. Sie ist an der Fläche des Flügelschenkels 11 angebracht, die zum Flügelschenkel 12 weist. Die Schipplatte 20 ist mit Hilfe von Befestigungselementen 23.1, 23.2 in Form von Nieten mit dem Flügelschenkel 11 befestigt. In die Schipplatte 20 ist eine im wesentlichen rechteckig ausgebildete Verankerungsausnehmung 22 eingebracht. In diese Verankerungsausnehmung ragen von beiden Seiten ein Federwandelement 21.1 und ein Federwandelement 21.2 hinein. Die Verankerungsausnehmung 22 liegt vor der steigbügelförmigen Halteausnehmung 18.1. Wesentlich ist, daß die Federwandelemente 21.1, 21.2 die Breite der steigbügelförmigen Halteausnehmung 18.1 verkleinern, in dem sie etwa 0,1 bis 0,3 mm jeweils von einer Seite in diese hineinragen. Da der Flügelschenkel 12 gleichfalls über die steigbügelförmige Halteausnehmung 18.2 verfügt, kann auch in gleicher Art und Weise ihr gegenüber eine der Rasterklippeinheit 19 entsprechende Rasterklippeinheit angebracht werden. Als Ergänzung zur Rasterklippeinheit 19 müßte dann darüberliegend ein dem Verankerungspilz 15 entsprechender Verankerungspilz auf dem Flügelschenkel 12 angeordnet werden.

Auf dem Befestigungsschenkel 11 sind Befestigungsprismen 13.1 und 13.2 und auf dem Flügelschenkel 12 Befestigungsprismen 13.3 und 13.4 angeordnet. Befestigungsausnehmungen 14.1, 14.2, 14.3, 14.4 durchdringen die Befestigungsprismen 13.1, ... 13.4 und die Flügelschenkel 11 und 12.

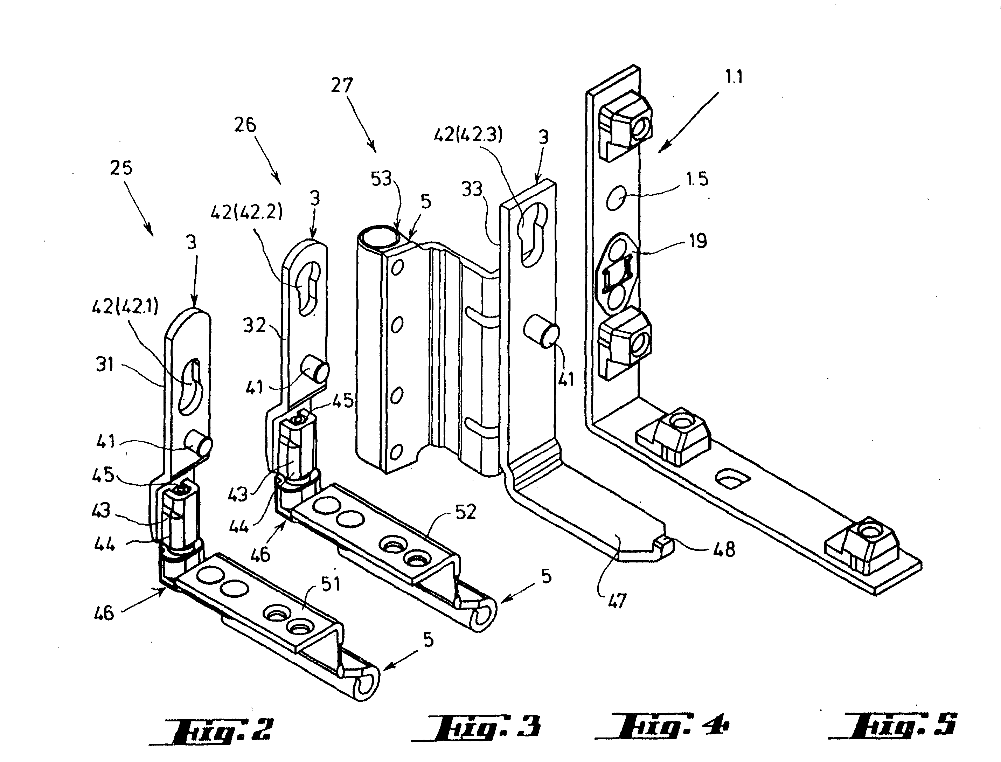

In den Fig. 2, 3 und 4 sind die Scharnierteile 25, 26 und 27 gezeigt.

Sie bestehen aus
- einen einheitlichen Adapterprofil 3 und
- einer unterschiedlich ausgebildeten Ecklagereinheit 5

Wie aus den Fig. 2 bis 4 deutlich wird, ist das Adapterprofil im wesentlichen gleich ausgebildet. Es weist eine Einhängausnehmung 42 auf, unter der jeweils ein Verankerungsbolzenpilz 41 angeordnet ist.

Beim Scharnierteil 25 ist das Adapterprofil als oberseitiges Adapterprofil 31 ausgebildet. Hierbei ist die Einhängausnehmung als Einhängschlüsselloch 42.1 in das Adapterprofil 31 eingebracht. Die runde Ausnehmung des Schlüssellochs weist zum Verankerungsbolzenpilz 42 und hat einen Durchmesser von etwa 10 bis 12 mm. Die sich daran anschließende Langlochausnehmung hat eine Breite von 7 mm und ist 10 mm lang. Der darunterliegende Verankerungsbolzenpilz hat einen Zylinderdurchmesser von 5 mm. Seine pilzförmige Verdickung hat einen Durchmesser von 6 mm und eine Höhe von etwa 0,5 mm.

Das Adapterprofil 3 für das Scharnierteil 26 ist als unterseitiges Adapterprofil 32 ausgebildet. Es gleicht dem bereits beschriebenen Adapterprofil 31, nur ist sein Einhängschlüsselloch 42.2 mit der kreisrunden Durchbrechung nach oben gestellt.

Das Adapterprofil 3 des Scharnierteils 27 ist als Drehadapterprofil 33 geformt. Sein Einhängeschlüsselloch 42.3 ist ähnlich dem des Adapterprofils 32 eingebracht. Darunter liegt sein Verankerungsbolzenpilz 41.

Die Adapterprofile 31 und 32 sind aus einem 15 mm breiten Bandmaterial mit einer Dicke von 3 mm geformt. Ihr Verankerungsbolzenpilz 41 ist mit einer Nietverbindung in ihnen gehalten.

Baugleich ist bei den Adapterprofilen 31 und 32, daß sie unterhalb des Verankerungsbolzenpilzes 41 zurückgebogen sind und ein Drehgelenk 43 tragen. Das Drehgelenk 43 weist ein Klemmteil 44 auf, das mit dem Adapterprofil vernietet ist. Im Klemmteil ist drehbeweglich ein Drehbolzen 46 angeordnet, der mit Hilfe einer Schraubverbindung 46 mit der Ecklagereinheit 5 verbunden ist.

Die Ecklagereinheit 5 ist beim Scharnierteil 25 als linksseitiges Kipplager 51 und beim Scharnierteil 26 als rechtsseitiges Kipplager 52, die jeweils entsprechende Durchbrechungen und einer Lagerhülse aufweisen, mit Hilfe von Nieten mit der Schraubverbindung 46 verbunden.

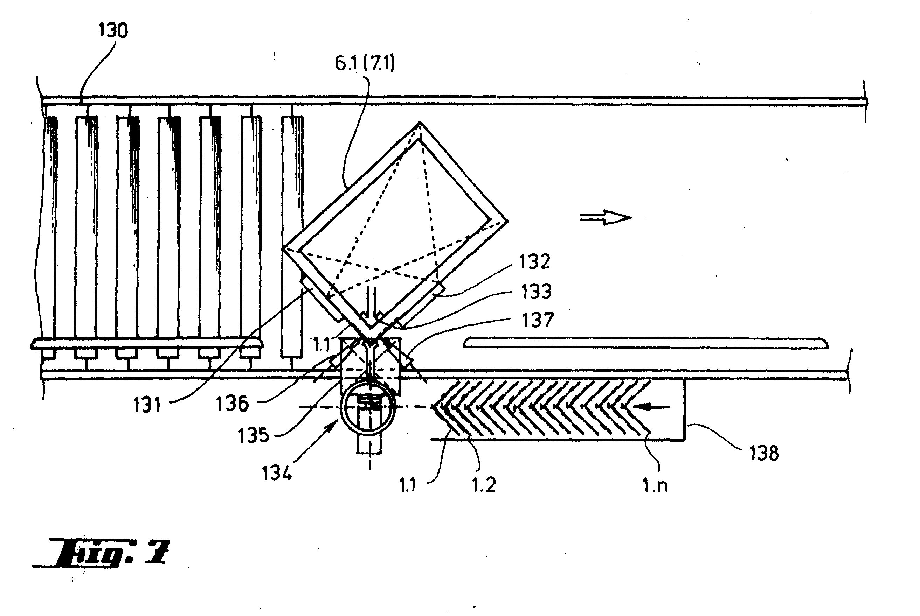

Bei dem in Fig. 4 dargestellten Scharnierteil 27 geht dessen Adapterprofil 33 in einen Ecklagerwinkel 47 über, der eine Haltespitze 48 aufweist. An der dem Verankerungsbolzenpilz 41 gegenüberliegenden Seite des Drehadapterprofils 33 ist die Ecklagereinheit 5 in Gestalt eines Ecklagerbands 53 angeformt. Die Teile 3 und 5 des Scharnierteils 27 sind vorzugsweise aus einem Material der gleichen Dicke hergestellt, wie die Teile 3 und 5 der Scharnierteile 25 und 26.

Die Durchführung einer montageautomatenunterstützten Montage mit Hilfe der in dem Ausführungsbeispiel beschriebenen Scharnierteile 25 und 26 sei anhand der Fig. 1a bis 9 erläutert.

Flügelrahmen 6.1 (7.1), 6.2 und 6.3 von Fenster oder Türen werden heutzutage teilautomatisch oder vollautomatisch aus den entsprechenden Rahmenprofilen hergestellt. Häufig wird hierbei taktweise vorgegangen, wobei in einer Stufe beispielsweise die Kunststoff- oder Aluminiumholme des Flügelrahmens verschweißt werden und in der nachfolgenden Putzstufe die Schweißnähte egalisiert werden. Die Taktzeit liegt beispielsweise bei zwei Minuten.

Wie Fig. 6 zeigt, können die einheitlichen Einheits-Flügelwinkel 1.1, 1.2 und 1.3 auf eine der Ecken 10.1, 10.2, 10.3, 10.4 des Flügelrahmens gesetzt werden.

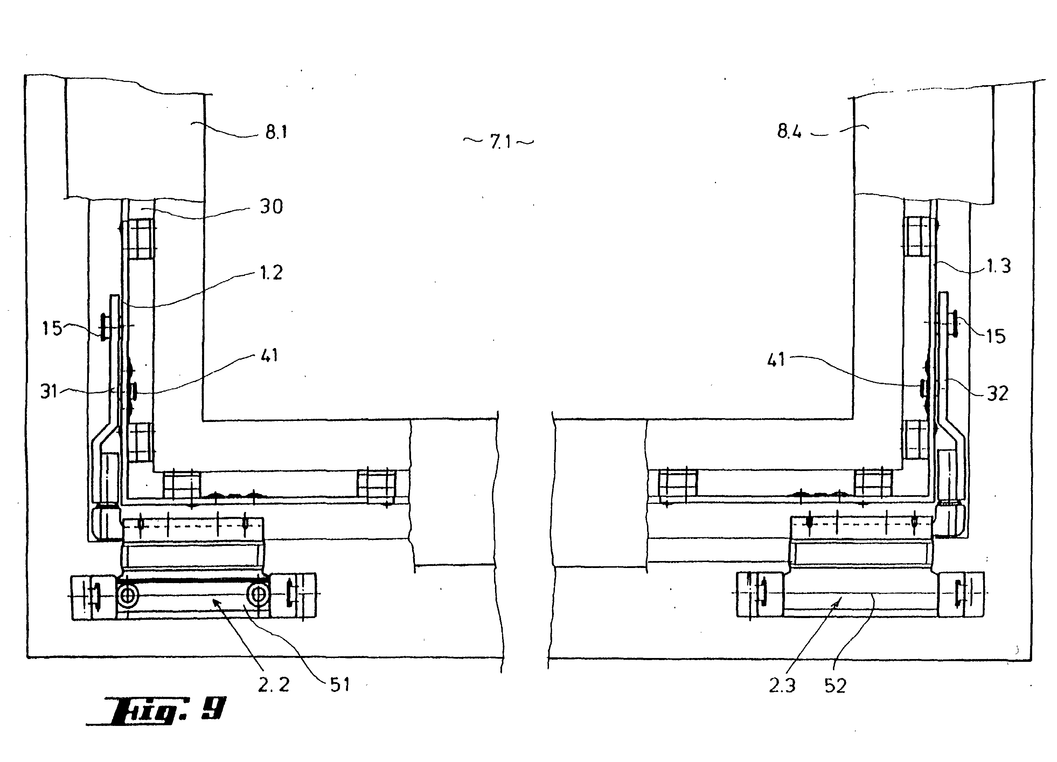

Das Anbringen der Einheits-Flügellagerwinkel 1.1, ... erfolgt in einer Eckumlenkungsanschlagstation, wie sie in Fig. 7 dargestellt ist. Sie besteht aus einer Rollenbahn 130 und einer Montageeinrichtung 134, der Leisten 131 und 132 sowie ein Spannkopf 133 zugeordnet sind und einem Flügellagermagazin 138, in dem die Einheits-Flügellagerwinkel 1.1, ... 1.n abgespeichert sind.

Über die Rollbahn 130 wird der Flügelrahmen 6.1 (7.1) zugeführt. Die Leisten 131, 132 erfassen den Flügelrahmen und drehen ihn in eine Position, in der, wie hier dargestellt, die Rahmenecke gegenüber der Montageeinrichtung 134 positioniert wird. Der Spannkopf 133 sorgt für einen sicheren Halt des Flügelrahmens 6.1 (7.1). Die Montageeinrichtung 134 hat vorher mit ihrem Montagekopf 135 aus dem Flügellagermagazin 138 den Einheits-Flügellagerwinkel 1.1 entnommen. Der auf eine Rahmenecke 10.1 aufgesetzte Einheits-Flügellagerwinkel 1.1 greift mit den Befestigungsprismen 13.1, ... 13.4 in eine umlaufende Aufnahmenut 30 der Fensterholme 8.1, 8.2, 8.3 bzw. 8.4 des Flügelrahmens ein. Der so eingesetzte Einheits-Flügellagerwinkel 1.1 wird mit Hilfe von Schraubaggregaten 136 und 137 am Flügelrahmen 6.1 (7.1) mit Schrauben, die durch die Befestigungsausnehmungen 14.1, ... geführt werden, befestigt. In gleicher Art und Weise werden die nächsten Rahmenecken 10.2, ... 10.4 beschlagen.

Anschließend wird der Flügelrahmen 6.1 (7.1) von der Rollenbahn 130 abgenommen und zum Versand fertig gemacht. Mit dem Rahmen werden entsprechende Scharnierteile, wie sie in den Fig. 2, 3 und 4 dargestellt sind, mitgeliefert. Welche Scharnierteile mitgeliefert werden, hängt davon ab, ob der Flügelrahmen für eine Kipp- und/oder Drehfunktion ausgebildet werden soll.

Beim Fensterhersteller und/ oder auf der Baustelle werden dann die Scharnierteile befestigt.

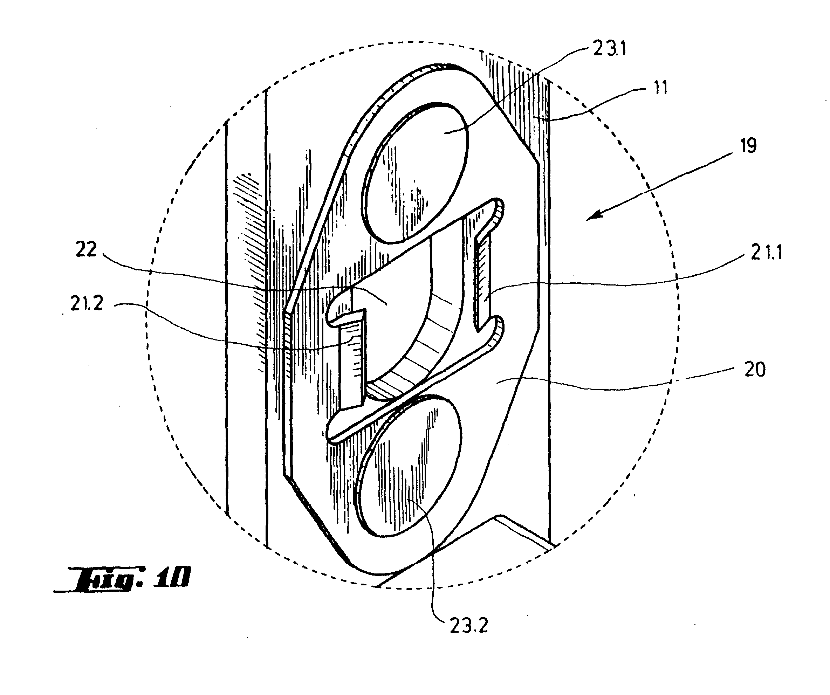

Der Befestigungsvorgang vollzieht sich derart, daß für den Scharnierbeschlag 2.1 gemäß Fig. 8 an den bereits befestigten Einheits-Flügellagerwinkel 1.1 das Adapterprofil 32 eingehängt wird. Hierzu wird der Verankerungspilz 15 durch die Rundlochausnehmung des Einhängschlüssellochs 42.2 gesteckt und der zylindrische Teil durch die sich anschließende Langlochausnehmung so weit geschoben, daß sie am Ende des Langloches anstößt. In dieser Stellung steht der Verankerungsbolzenpilz 41 der steigbügelförmigen Halteausnehmung 18.1 gegenüber und läßt sich in diese eindrücken. Beim Eindrückvorgang überwindet die umlaufende pilzförmige Verdickung des Verankerungsbolzenpilz 41 die sich gegenüberliegenden Federwandelemente 21.1 und 21.2, so daß sich diese hinter die pilzförmige Verdickung des Verankerungsbolzenpilzes 41 legen. Hierdurch bilden die Rasterklippeinheit 19 und der Verankerungsbolzenpilz 41 eine nur mit Gewalt lösbare Rastverbindung derart, daß das Scharnierteil 26 mit dem Einheits-Flügellagerwinkel 1.1 verbunden wird. Unterstützt wird diese Verbindung durch die Einhängverbindung, die aus dem Einhängschlüsselloch 42.2 und dem Verankerungspilz 15 besteht.

Die Rastverbindung 19, 41 und die Einhängverbindung 15, 42.2 haben so viel Spiel, daß sich der Flügelrahmen 6.1 im umlaufenden Rahmen justieren läßt. Unterstützt wird die Justierung durch die Verstellmöglichkeit, die über die Schraubverbindung 46 gegeben ist.

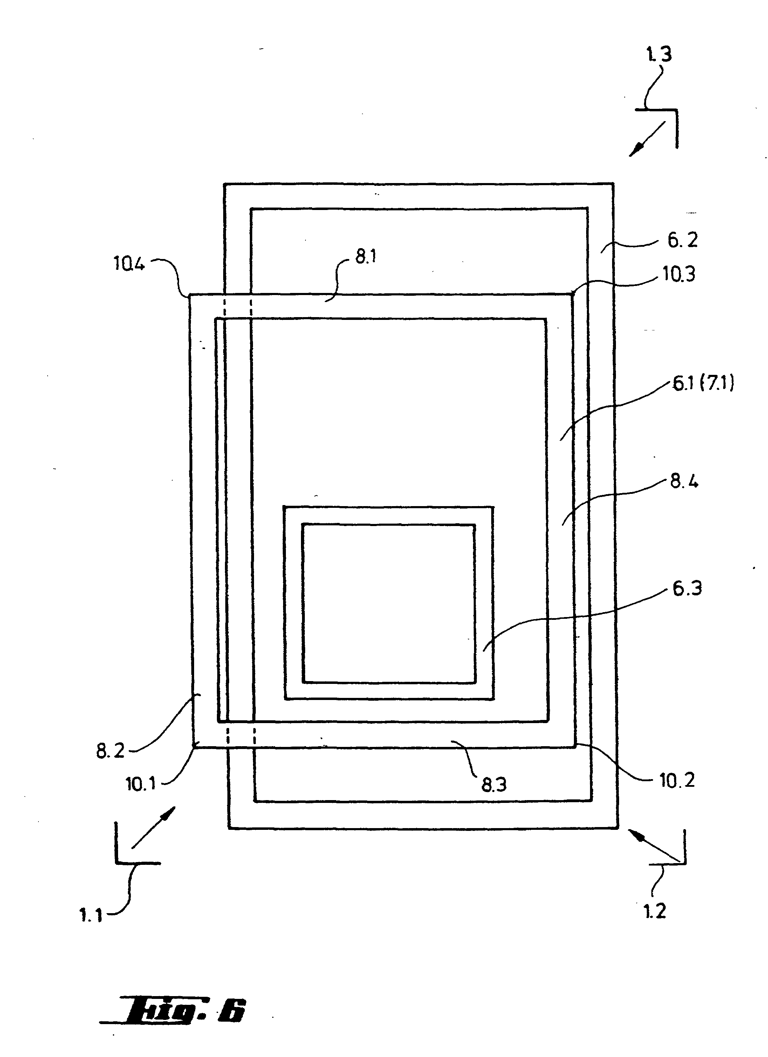

In Fig. 9 sind Scharnierbeschläge 2.2 und 2.3 für einen als Kippflügel ausgebildeten Flügelrahmen 7.1 gezeigt. Hierbei kommen die Scharnierteile 25 und 26 zum Einsatz, die in den Fig. 2 und 3 gezeigt sind. Sie werden, wie bereits beschrieben, in die bereits montageautomatenmontierten Einheits-Flügellagerwinkel 1.2 und 1.3 mit Hilfe der Rastverbindung 19, 41 und der Einhängverbindung 15, 42.1 bzw. 42.2 untereinander befestigt. Das Befestigen der Scharnierteile an den Einheits-Flügellagerwinkeln kann aufgrund ihrer Einfachheit von Hand durchgeführt werden. Die reine Handarbeit kann von Hilfswerkzeugen unterstützt werden.

Für das Befestigen der Scharnierbeschläge 2.1, 2.2, 2.3 ist es erfindungswesentlich, daß unter Verwendung baugleicher Einheits-Flügellagerwinkel 1.1, ... unterschiedlch ausgebildete Scharnierteile 25, 26, 27 eingesetzt werden können. Die Scharnierteile weisen im wesentlichen gleich ausgebildete Adapterprofile 3 auf, an die sich unterschiedlich ausgebildete Ecklagereinheiten anschließen. Die Ecklagereinheiten können für den unterschiedlichsten Einsatz ausgebildet sein. Gängig sind, wie bereits beschrieben, Kipplager bzw. Ecklagerbänder.

## Patentansprüche

1. Verfahren für eine montageautomatenunterstützte Montage von Scharnierbeschlägen (2.1, 2.2, 2.3) an einem Flügel (6.1, 6.2, 6.3, 7.1) eines Fensters oder einer Tür, bei dem
a) in einer ersten Montagephase mittels Montageautomaten am Flügel (6.1, 6.2, 6.3, 7.1) wenigstens ein Einheits-Flügellagerwinkel (1.1, ... 1.n) montiert und
b) in einer nachfolgenden zweiten Montagephase ein entsprechendes Scharnierteil (25, 26, 27) des jeweiligen Scharnierbeschlages (2.1, 2.2, 2.3) wenigstens durch eine Rastverbindung (19, 41) an dem Einheits-Flügellagerwinkel (1.1, ... 1.n) befestigt wird.

2. Verfahren nach Anspruch 1, **dadurch gekennzeichnet, daß** die Scharnierteile (25, 26, 27) vor der Herstellung der Rastverbindung an die Einheits-Flügellagerwinkel (1.1, .. 1.n) an- und eingehängt werden.

3. Verfahren nach Anspruch 1 oder 2, **dadurch gekennzeichnet, daß** baugleiche Einheits-Flügellagerwinkel (1.1, ... 1.n) eingesetzt werden.

4. Verfahren nach einem der Ansprüche 1 bis 3, **dadurch gekennzeichnet, daß** die Scharnierteile (25, 26, 27) mit einem im wesentlichen baugleichen Adapterprofil (3) in die Einheitsflügellagerwinkel (1.1, ... 1.n) insbesondere von Hand, an- und eingehängt und in ihnen verrastet werden.

5. Scharnierbeschlag (2.1, 2.2, 2.3) für eine montageautomatenunterstützte Montage an einem Flügel (6.1, 6.2, 6.3, 7.1) eines Fensters oder einer Tür, der aufweist
- einen Flügellagerwinkel (1.1, ... 1.n) und
- ein Scharnierteil (25, 26, 27) mit einer Ecklagereinheit (5),
**dadurch gekennzeichnet,**
- **daß** der Flügellagerwinkel als ein Einheits-Flügellagerwinkel (1.1, ... 1.n) ausgebildet ist, wobei an einem seiner Flügelschenkel (11, 12) wenigstens eine Rasterklippeinheit (19) angeordnet ist, und
- **daß** das Scharnierteil (25, 26, 27) aus einem Adapterprofil (3) mit wenigstens einem Verankerungsbolzenpilz (41) besteht, das mit der jeweiligen Ecklagereinheit (5) verbunden ist.

6. Scharnierbeschlag für eine montageautomatenunterstützte Montage an einem Flügel eines Fensters oder einer Tür, der aufweist
- einen Flügellagerwinkel und
- ein Scharnierteil mit einer Ecklagereinheit,
**dadurch gekennzeichnet,**
- **daß** der Flügellagerwinkel als ein Einheits-Flügellagerwinkel ausgebildet ist, wobei an einem seiner Flügelschenkel wenigstens ein Verankerungspilz angeordnet ist, und
- **daß** das Scharnierteil aus einem Adapterprofil mit wenigstens einer Rasterklippeinheit besteht, das mit der jeweiligen Ecklagereinheit verbunden ist.

7. Scharnierbeschlag nach Anspruch 5 oder 6, **dadurch gekennzeichnet**, das auf dem Flügelschenkel (11, 12) des Einheits-Flügellagerwinkels (1.1, ... 1.n) ein Verankerungspilz (15) aufgesetzt ist.

8. Scharnierbeschlag nach einem der Ansprüche 5 bis 7, **dadurch gekennzeichnet, daß** in das Adapter-Profil (3) eine Einhängausnehmung (42) eingebracht ist.

9. Scharnierbeschlag nach Anspruch 8, **dadurch gekennzeichnet, daß** die Einhängausnehmung (42) als Einhängschlüsselloch (42.1, 42.2, 42.3) ausgebildet ist, wobei dessen Rundlochausnehmung einen solchen Durchmesser hat, daß die Pilzverdickung des Verankerungspilzes (15) durch sie hindurchführbar ist, und wobei dessen sich an die Rundlochausnehmung anschließende Langlochausnehmung so breit ist, daß der zylinderförmige Schaft des Verankerungspilzes (15) in ihr und seine Pilzverdickung auf dem Adapterprofil (3) führbar ist.

10. Scharnierbeschlag nach einem der Ansprüche 7 bis 9, **dadurch gekennzeichnet, daß** die Rastereinheit (19) und der Verankerungspilz (15) an jedem der Flügelschenkel (11, 12) angeordnet ist.

11. Scharnier nach einem der Ansprüche 5 bis 10, **dadurch gekennzeichnet, daß** die Rasteradaptereinheit (19) eine vor einer in einen der Flügelschenkel (11, 12) eingebrachte Halteausnehmung (18.1, 18.2) vorgesetzte Schipplatte (20) ist, in die eine Verankerungsausnehmung (22) eingebracht ist, die von wenigstens einem Federwandelement (21.1, 21.2) begrenzt ist.

12. Scharnierbeschlag nach Anspruch 11, **dadurch gekennzeichnet, daß** die Schipplatte (20) mit wenigstens einem Befestigungselement (23.1, 23.2) vor der Halteausnehmung (18.1, 18.2) so angebracht ist, daß die Federwandelemente (21.1, 21.2) wenigstens teilweise in diese hineinragen.

13. Scharnierbeschlag nach Anspruch 11 oder 12, **dadurch gekennzeichnet, daß** die Halteausnehmung (18.1, 18.2) steigbügelförmig ausgebildet ist.

14. Scharnierbeschlag nach einem der Ansprüche 5 bis 13, **dadurch gekennzeichnet, daß** der Einheits-Flügellagerwinkel (1.1, ... 1.n) aus zwei im wesentlichen gleichlangen Flügelschenkeln (11, 12) besteht, die in einem rechten Winkel zueinander angeordnet sind.

15. Scharnierbeschlag nach einem der Ansprüche 5 bis 14, **dadurch gekennzeichnet, daß** auf jedem Flügelschenkel (11, 12) wenigstens ein Befestigungsprisma (13.1, ... 13.4) angeordnet ist und das eine Befestigungsausnehmung (14.1, ... 14.4) jedes Befestigungsprisma (13.1, ... 13.4) und den jeweiligen Flügelschenkel (11, 12) durchzieht.

16. Scharnierbeschlag nach einem der Ansprüche 5 bis 15, **dadurch gekennzeichnet, daß** die Ecklagereinheit (5) mit dem Adapterprofil (3) durch ein Drehgelenk (43) verbunden sind.

17. Scharnierbeschlag nach Anspruch 16 **dadurch gekennzeichnet, daß** das Drehgelenk (43) durch eine Schraubverbindung (46) gehalten ist.

18. Scharnierbeschlag nach einem der Ansprüche 5 bis 17, **dadurch gekennzeichnet, daß** die Ecklagereinheit (5) als Kipplager (5.1, 5.2) oder als Ecklager (5.3) ausgebildet ist.

## Claims

1. A method of assembling hinge fittings (2.1, 2.2, 2.3) with the assistance of an automatic assembly machine on a leaf (6.1, 6.2, 6.3. 7.1) of a window or a door, wherein
a) in a first assembly phase, at least one unit leaf bearing bracket (1.1, ... 1.n) is mounted by an automatic assembly machine on the leaf (6.1, 6.2, 6.3, 7.1) and
b) in a following second assembly phase a corresponding hinge part (25, 26, 27) of the respective hinge fitting (2.1, 2.2, 2.3) is fixed on the unit leaf bearing bracket (1.1, ... 1.n) at least by a catch connection (19, 41).

2. A method according to claim 1, **characterised in that** the hinge parts (25, 26, 27) are attached and engaged on the unit leaf bearing bracket (1.1, ... 1.n) before the catch connection is made.

3. A method according to claim 1 or 2, **characterised in that** unit leaf bearing brackets (1.1, ... 1.n) of identical construction are used.

4. A method according to any one of claims 1 to 3, **characterised in that** the hinge parts (25, 26, 27) are attached and engaged on the unit leaf bearing brackets (1.1, ... 1.n), particularly by hand, with an adapter profile (3) of substantially identical construction, and are locked therein.

5. A hinge fitting (2.1, 2.2, 2.3) for assembly on a leaf (6.1, 6.2, 6.3, 7.1) of a window or door with the assistance of an automatic assembly machine, said fitting comprising:
- a leaf bearing bracket (1.1, ... 1.n) and
- a hinge part (25, 26, 27) with a corner bearing unit (5),
**characterised in that**
- the leaf bearing bracket is constructed as a unit leaf bearing bracket (1.1, ... 1.n), at least one grid clip unit (19) being disposed on one of its leaf limbs (11, 12) and
- **in that** the hinge part (25, 26, 27) consists of an adapter profile (3) with at least one anchoring bolt mushroom (41) connected to the respective corner bearing unit (5).

6. A hinge fitting for assembly on a leaf of a window or door with the assistance of an automatic assembly machine, said fitting comprising:
- a leaf bearing bracket and
- a hinge part with a corner bearing unit,
**characterised in that**
- the leaf bearing bracket is constructed as a unit leaf bearing bracket, at least one anchoring mushroom being disposed on one of its leaf limbs, and
- **in that** the hinge part consists of an adapter profile with at least one grid clip unit connected to the respective corner bearing unit.

7. A hinge fitting according to claim 5 or 6, **characterised in that** an anchoring mushroom (15) is fitted on the leaf limb (11, 12) of the unit leaf bearing bracket (1.1, ... 1.n).

8. A hinge fitting according to any one of claims 5 to 7, **characterised in that** an engagement recess (42) is formed in the adapter profile (3).

9. A hinge fitting according to claim 8, **characterised in that** the engagement recess (42) is constructed as an engagement keyhole (42.1, 42.2, 42.3), its round hole recess having a diameter such that the thickened portion of the anchoring mushroom (15) is passable therethrough, and wherein its slot recess adjoining the round hole recess is so wide that the cylindrical shank of the anchoring mushroom (15) can be guided therein and its thickened portion can be guided on the adapter profile (3).

10. A hinge fitting according to any one of claims 7 to 9, **characterised in that** the grid unit (19) and the anchoring mushroom (15) are disposed on each of the leaf limbs (11, 12).

11. A hinge according to any one of claims 5 to 10, **characterised in that** the grid adapter unit (19) is a scoop plate (20) which is disposed in front of a retaining recess (18.1, 18.2) formed in one of the leaf limbs (11, 12) and in which there is formed an anchoring recess (22) bounded by at least one spring wall element (21.1, 21.2).

12. A hinge fitting according to claim 11, **characterised in that** the scoop plate (20) is so mounted with at least one fixing element (23.1, 23.2) in front of the retaining recess (18.1, 18.2) that the spring wall elements (21.1, 21.2) project at least partially thereinto.

13. A hinge fitting according to claim 11 or 12, **characterised in that** the retaining recess (18.1, 18.2) is stirrup-shaped.

14. A hinge fitting according to any one of claims 5 to 13, **characterised in that** the unit leaf bearing bracket (1.1, ... 1.n) consists of two substantially equally long leaf limbs (11, 12) disposed at a right angle to one another.

15. A hinge fitting according to any one of claims 5 to 14, **characterised in that** at least one fixing prism (13.1, ... 13.4) is disposed on each leaf limb (11, 12) and the one fixing recess (14.1, ... 14.4) extends through each fixing prism (13.1, 13.4) and the respective leaf limb (11, 12).

16. A hinge fitting according to any one of claims 5 to 15, **characterised in that** the corner bearing unit (5) is connected to the adapter profile by a swivel joint (43).

17. A hinge fitting according to claim 16, **characterised in that** the swivel joint (43) is held by a screw connection (46).

18. A hinge fitting according to any one of claims 5 to 17, **characterised in that** the corner bearing unit (5) is constructed as a tipping bearing (5.1, 5.2) or as a corner bearing (5.3).

## Revendications

1. Procédé de montage, assisté par automate de montage, pour ferrures (2.1, 2.2, 2.3) de charnières sur un battant (6.1, 6.2, 6.3, 7.1) de fenêtre ou de porte, dans lequel
a) au moins une unité d'équerre (1.1, ... 1.n) de palier de battant est montée sur le battant(6.1, 6.2, 6.3, 7.1) dans une première phase de montage au moyen d'un automate de montage et
b) un élément correspondant (25, 26, 27) de charnière de la ferrure respective (2.1, 2.2, 2.3) de charnière est fixée, dans une deuxième phase de montage qui suit, au moins par un assemblage à encliquetage (19, 41) sur l'unité d'équerre (1.1, ... 1.n) de palier de battant.

2. Procédé selon la revendication 1, **caractérisé en ce que** les éléments (25, 26, 27) de charnières sont suspendus et accrochés à l'unité d'équerre (1.1, ... 1.n) de palier de battant avant la réalisation de l'assemblage par encliquetage.

3. Procédé selon la revendication 1 ou 2, **caractérisé en ce qu'**il utilise des unités d'équerres (1.1, ... 1.n) de paliers de battants de la même configuration.

4. Procédé selon l'une quelconque des revendications précédentes, **caractérisé en ce que** les éléments (25, 26, 27) de charnières sont suspendus et accrochés dans les unités d'équerres (1.1, ... 1.n) de paliers de battants et y sont encliquetés, en particulier à la main, au moyen de profils d'adaptateurs (3) qui sont tous sensiblement de la même configuration.

5. Ferrure (2.1, 2.2, 2.3) de charnière, pour montage assisté par automate de montage sur un battant (6.1, 6.2, 6.3, 7.1) de fenêtre ou de porte, qui comprend:
a) une unité d'équerre (1.1, ... 1.n) de palier de battant et
b) un élément (25, 26, 27) de charnière à unité de palier (5) de coin
**caractérisé en ce que**
- l'équerre de palier de battant consiste en une unité d'équerre (1.1, ... 1.n) de palier de battant, qui comporte sur l'une de ses branches (11, 12) de battant au moins une unité d'attache par encliquetage (19), et **en ce que**
l'élément (25, 26, 27) de charnière consiste en un profil d'adaptateur (3) qui comporte au moins un champignon de goujon d'ancrage (41), qui est assemblé avec l'unité respective de palier (5) de coin.

6. Ferrure de charnière pour montage assisté par automate de montage sur un battant de fenêtre ou de porte, qui comprend:
- une équerre de palier de battant et
- un élément de charnière à unité de palier de coin,
**caractérisée en ce que**
- l'équerre de palier de battant consiste en une unité d'équerre de palier de battant, qui comporte sur l'une de ses branches de battant au moins un champignon d'ancrage, et **en ce que**
- l'élément de charnière consiste en un profil d'adaptateur qui comporte au moins une unité d'attache par encliquetage et qui est assemblé avec l'unité respective de palier de coin.

7. Ferrure de charnière selon la revendication 5 ou 6, **caractérisée en ce qu'**un champignon d'ancrage (15) est monté sur la branche (11, 12) de battant de l'unité d'équerre (1.1, ... 1.n) de palier de battant.

8. Ferrure de charnière selon l'une quelconque des revendications 5 à 7, **caractérisée en ce qu'**un évidement d'accrochage (42) est ménagé dans le profil d'adaptateur (3).

9. Ferrure de charnière selon la revendication 8, **caractérisée en ce que** l'évidement d'accrochage (42) est en forme d'entrée de serrure d'accrochage (42.1, 42.2, 42.3), dont l'évidemment rond d'entrée est d'un diamètre tel que l'épaississement de champignon du champignon d'ancrage (15) peut y être introduit, et dont l'évidemment allongé d'entrée qui se raccorde à l'évidement rond de trou est suffisamment large pour que la tige cylindrique du champignon d'ancrage (15) puisse y être guidée et que son épaississement de champignon puisse être guidé sur le profil d'adaptateur (3).

10. Ferrure de charnière selon l'une quelconque des revendications 7 à 9, **caractérisée en ce que** l'unité d'encliquetage (19) et le champignon d'ancrage (15) sont disposés sur chacune des branches (11, 12) de battant.

11. Ferrure de charnière selon l'une quelconque des revendications 5 à 10, **caractérisée en ce que** l'unité d'attache par encliquetage (19) est une plaque (20) à lèvres qui s'avancent qui est disposée devant un évidement de maintien (18.1, 18.2) ménagé dans la branche (11, 12) de battant et dans laquelle est ménagé un évidement d'ancrage (22) qui est limité par au moins un élément (21.1, 21.2) de paroi élastique.

12. Ferrure de charnière selon la revendication 11, **caractérisée en ce que** la plaque (20) à lèvres qui s'avancent est montée au moyen d'au moins un élément de fixation (23.1, 23.2) devant l'évidemment de maintien (18.1, 18.2) d'une manière telle que les éléments (21.1, 21.2) de parois élastiques se dressent au moins partiellement en surplomb au-dessus de ce dernier.

13. Ferrure de charnière selon la revendication 11 ou 12, **caractérisée en ce que** l'évidement de maintien (18.1, 18.2) est en forme d'étrier.

14. Ferrure de charnière selon l'une quelconque des revendications 5 à 13, **caractérisée en ce que** l'unité d'équerre (1.1, ... 1.n) de palier de battant se compose de deux branches (11, 12) de battant de longueurs sensiblement égales, qui sont disposées perpendiculairement l'une à l'autre.

15. Ferrure de charnière selon l'une quelconque des revendications 5 à 14, **caractérisée en ce qu'**au moins un prisme de fixation (13.1, ... 13.4) est disposé sur chaque branche (11, 12) de battant et **en ce qu'**un évidement de fixation (14.1, ... 14.4) traverse chaque prisme de fixation (13.1, ... 13.4) et la branche respective (11, 12) de battant.

16. Ferrure de charnière selon l'une quelconque des revendications 5 à 15, **caractérisée en ce que** l'unité de palier (5) de coin est assemblée avec le profil d'adaptateur (3) par une articulation à rotation (43).

17. Ferrure de charnière selon la revendication 16, **caractérisée en ce que** l'articulation à rotation (43) est tenue par un assemblage à vis (46).

18. Ferrure de charnière selon l'une quelconque des revendications 5 à 17, **caractérisée en ce que** l'unité de palier (5) de coin consiste en un palier basculant (5.1, 5.2) ou en un palier de coin (5.3).
